# EUROPÄISCHE PATENTSCHRIFT

(11) **EP 3 714 312 B1**
(45) Veröffentlichungstag und Bekanntmachung des Hinweises auf die Patenterteilung: **01.12.2021**
(21) Anmeldenummer: 18783433.8
(22) Anmeldetag: 04.10.2018
(51) Int. Cl.: G02B 27/00, G02B 7/00, B60S 1/52, B60S 1/54, B60S 1/56, H04N 5/225, G03B 17/02

(54) **BLENDE UND VORRICHTUNG ZUR REINIGUNG VON SICHTSYSTEMEN**
APERTURE AND DEVICE FOR CLEANING VISION SYSTEMS
OBTURATEUR ET DISPOSITIF DE NETTOYAGE DE SYSTÈMES DE VISION

(30) Priorität: 22.11.2017 DE 102017127526
(43) Veröffentlichungstag der Anmeldung: 30.09.2020
(73) Patentinhaber: Rheinmetall Landsysteme GmbH, 29345 Unterlüß (DE)
(72) Erfinder: RÖSTEL, Burkhard, 24232 Schönkirchen (DE)
(74) Vertreter: Kohlstedde, Jürgen
(86) Internationale Anmeldenummer: PCT/EP2018/076942
(87) Internationale Veröffentlichungsnummer: WO 2019/101409

(56) Entgegenhaltungen:
- DE-A1-102015 210 469
- US-A1- 2016 103 316
- US-A1- 2017 192 226

## Beschreibung

Die vorliegende Erfindung betrifft einer Blende zur Reinigung von Sichtsystemen sowie eine Vorrichtung für die Reinigung von Sichtsystem mit einer solchen Blende.

Solche Vorrichtungen werden überall dort benötigt, wo Sichtsysteme verwendet werden. Entsprechende Sichtsystem erhalten zunehmend Einzug in Fahrzeuge, insbesondere in militärischen Fahrzeugen. Hierbei wird statt der direkten Sicht durch eine Öffnung oder eine Glasscheibe eine indirekte Sicht verwendet. Das bedeutet, dass Sichtsysteme dazu verwendet werden, die Umgebung auf Bildschirme oder andere Projektionsflächen abzubilden.

Insbesondere bei der Verwendung als Fahrersichtsystem muss das Sichtfenster der verwendeten Kameras bei allen denkbaren Umweltbedingungen zuverlässig freigehalten werden. Dies ist notwendig, um eine klare und eindeutige Sicht den Fahrern solcher Fahrzeuge beim Fahren über Kamera zu ermöglichen. Auf die Scheibe treffende Regentropfen und/oder Schmutzpartikel müssen kontinuierlich entfernt werden.

Die vorliegende Erfindung betrifft somit Sichtsysteme, die mit Kameras ausgestattet sind, sind aber analog auch für Sensoren, optische und optoelektrische Einrichtungen zu verwenden sowie für Teleskope und/oder Laserfokussierungen. Der Einsatzbereich kann dabei für militärische als auch zivile Bereiche gelten.

Aus dem Stand der Technik ist dafür bekannt, Kameras mit jeweils einer Einzeldüse für Wasser und Druckluft zu versehen und die Verunreinigungen mittels Wasser zu entfernen und über Druckluft das Wasser zu entfernen. Über die Druckluft kann weiterhin Fremdwasser entfernt werden, beispielsweise durch Regen.

Mit einer aus dem Stand der Technik bekannten einzelnen Luftdüse, die von außen auf das Sichtsystem gerichtet ist, können darauf anhaftende Tropfen zwar entfernt werden, bei kontinuierlicher Tropfenbeaufschlagung, beispielsweise durch Regen, kann die Scheibe aber nicht freigehalten werden, da der Luftstrahl Tropfen aus der Umgebung anzieht und auf die Scheibe befördert.

Bei Systemen ohne Druckluft können Verschmutzungen per Wasserstrahl von der Scheibe zwar entfernt werden, es verbleiben aber Tropfen aus dem Wasserstrahl, die die Sicht beeinträchtigen und nach dem Abtrocknen Ränder hinterlassen können, die die Sicht beeinträchtigen können.

Von außen auf die Kamerascheibe gerichtete Düsen müssen außerhalb des Sichtfeldes der Kamera angeordnet sein, damit sie das Kamerabild nicht beeinflussen und außerdem einigen Abstand zur Fensterfläche haben, damit der Sprühkegel die gesamte Fensterfläche abdeckt. Die über die Kamerafrontfläche hervorstehenden Düsen nehmen oft eine exponierte Position ein und müssen dann durch beispielsweise Schutzbügel gegen Beschädigung geschützt werden. Die Düsen beanspruchen somit einen Bauraum und behindern die kompakte Integration der Kameras in der Fahrzeugkontur. Geräte zum Reinigen von Sichtsystemen sind bekannt aus DE102015210469, US2016/103316 und US2017/192226.

Aufgabe der vorliegenden Erfindung ist es somit eine Vorrichtung zu offenbaren, die Sichtsysteme kontinuierlich freihalten kann, wobei Feststoffpartikel sowie auch Fluide entfernt werden können. Weiterhin ist es Aufgabe der vorliegenden Erfindung, Flüssigkeiten wie Wasser rückstandsfrei vom Sichtsystem entfernen zu können. Die vorgenannten Aufgaben sollen so realisiert werden, dass der notwendige Bauraum für die Kamera minimiert wird.

Diese Aufgaben werden durch die Merkmale des Hauptanspruchs gelöst, nämlich durch die Verwendung einer entsprechenden Blende mit den Merkmalen des Anspruchs 1. Ebenso wird die Aufgabe durch die Vorrichtung für die Reinigung von Sichtsystemen gelöst, die eine der vorgenannten Blenden gemäß Anspruch 10 verwendet.

Die vorliegende Erfindung löst die vorangegangene Aufgabe durch die Verwendung einer Blende zur Reinigung von Sichtsystemen. Die Blende besitzt dazu ein Fenster, welches von der Blende zumindest teilweise eingefasst werden kann.

Die Blende ist dazu derart gestaltet, dass sie einen Rand besitzt, mittels welchem das Fenster eingefasst werden kann. Das Fenster wird dazu, zumindest teilweise, in die Blende eingelegt. Nach Einlegen des Fensters in die Blende besitzt das Fenster zwei Seiten, nämlich zum einen eine Seite, die zur Kamera hin zeigt und eine Seite, die von der Kamera weg zeigt. Die Seite, die von der Kamera weg zeigt, ist der Außenbereich des Fensters.

Die Blende besitzt Auflageflächen, in welche das Fenster eingelegt wird. Die Auflageflächen sind dabei so gestaltet, dass der größte Teil der Scheibe frei bleibt, um eine freie Sicht von der zur Kamera hingerichteten Seite zum Außenbereich zu gewährleisten.

Die erfindungsgemäße Blende besitzt weiterhin ein Gasanschluss, an welchem eine Gasleitung angeschlossen werden kann und ein Flüssigkeitsanschluss, an welchem eine Flüssigkeitsleitung angeschlossen werden kann. Die beiden Leitungen dienen zur Zuführung von Gas bzw. Flüssigkeiten und somit zur Reinigung des Fensters. Als Gas wird vorgeschlagen, Luft zu verwenden. Als Flüssigkeit kann Wasser verwendet werden. Es sind aber auch weitere Ausführungsformen hierzu denkbar. So kann Stickstoff (N2) als Gas verwendet werden und/oder ein mit Reinigungszusätzen versehenes Fluid als Flüssigkeit. Unter Flüssigkeit kann hierzu auch verstanden werden, ein Flüssigkeitsgemisch zu verwenden, beispielsweise Wasser und Luft.

Die Auflageflächen der Blende sind so gestaltet, dass bei eingefasstem Fenster ein Hohlraum gebildet wird, welcher durch die Blende und das Fenster begrenzt wird. Dieser Hohlraum ist durch mindestens eine Bohrung mit dem Gasanschluss verbunden sowie mit dem Flüssigkeitsanschluss. Es können auch mehrere Bohrungen vorgesehen sein, bei welchen mindestens eine Bohrung den Hohlraum mit dem Gasanschluss verbindet und mindestens eine Bohrung den Hohlraum mit dem Flüssigkeitsanschluss. Außerdem ist eine Konfiguration mit zwei getrennten Kammern für Gas und Flüssigkeit möglich.

Weiterhin ist erfindungsgemäß mindestens ein Spalt vorgesehen, welcher den Hohlraum mit dem Außenbereich verbindet. Durch die beiden Verbindungen Spalt und Bohrung kann dann die zugeführte Luft bzw. das zugeführte Gas vom entsprechenden Anschluss über die Bohrung in den Hohlraum geleitet werden und von dort aus über den Spalt zum Außenbereich des Fensters.

Erfindungsgemäß wird eine Seite des Spaltes von der Glasoberfläche der Scheibe des Fensters gebildet, so dass das ausströmende Medium direkt auf die Glasoberfläche geleitet wird. Das Medium wird hierbei mit Druck am entsprechenden Anschluss versehen.

Erfindungsgemäß ist der Spalt dazu im Gegensatz zum Hohlraum klein gestaltet. In einer besonderen Ausführungsform ist der Spalt dazu kleiner als 0,2 mm. Weiterhin können mehrere Spalten vorgesehen sein, um das Gas bzw. die Flüssigkeit vom Hohlraum in den Außenbereich zu leiten.

In einer besonderen Ausführungsform ist mindestens eine Dichtung vorgesehen, um das Fenster gegenüber der Blende abzudichten. Diese Dichtung kann im Umfang der Einfassung angeordnet sein. Die Dichtung kann aber auch als Dichtfläche ausgeführt sein. In diesem Falle stellt die Auflagefläche des Fensters in der Blende die Dichtung dar. Entsprechendes Dichtmittel kann beispielsweise Silikon oder Gummi sein.

In einer weiteren besonderen Ausführungsform können auch mehrere Hohlräume vorgesehen sein, wobei mindestens ein Hohlraum durch mindestens einen Spalt mit dem Außenbereich verbunden ist und dieser Hohlraum durch mindestens eine Bohrung mit dem Gasanschluss verbunden ist. Ein weiterer Hohlraum ist dann durch mindestens einen weiteren Spalt ebenfalls mit dem Außenbereich verbunden und durch mindestens eine weitere Bohrung mit dem Flüssigkeitsanschluss verbunden. Somit besitzt dann die erfindungsgemäße Blende für die Flüssigkeit bzw. für das Gas unterschiedliche Hohlräume.

Die Blende weist weiterhin erfindungsgemäß Befestigungsmöglichkeiten auf, um die Blende an einen Träger zu befestigen. Bevorzugter Weise sollte diese Befestigung ebenfalls abgedichtet sein, damit nicht nur das Fenster mit der Blende dicht verschließt, sondern auch die Blende mit dem Träger.

Die erfindungsgemäßen Spalten der Blende können geometrisch geformt sein, um die Beschleunigung des Gases bzw. der Flüssigkeit weiter zu beeinflussen. Dazu kann in einer besonderen Ausführungsform der Spalt so gestaltet sein, dass er sich zum Außenbereich hin verengt. Somit wird eine weitere Beschleunigung am Spalt verwirklicht und der Spalt wirkt wie eine Düse.

Ebenso ist es möglich, dass der Spalt zum Fenster hin geneigt verläuft, sodass eine Lenkung des Luft bzw. des Wasserstrahls durch den Spalt möglich ist.

Erfindungsgemäß wird weiterhin eine Vorrichtung für die Reinigung von Sichtsystemen unter Verwendung der Blende vorgeschlagen. Hierbei besitzt die Vorrichtung eine Kamera und ein Gehäuse, in welchem die Kamera angebracht ist. Eine erfindungsgemäße Kamera kann ein bildgebendes Element sein, aber auch ein Sensor.

Erfindungsgemäß weist das Gehäuse eine Öffnung auf, wobei die Kamera zur Öffnung gerichtet angeordnet wird, so dass die Kamera Bildsignale durch die Öffnung aufnehmen kann.

Eine erfindungsgemäße Blende, wie vorangegangen geschrieben, ist weiterhin für die Vorrichtung vorgesehen. Erfindungsgemäß wird das Fenster an der Öffnung des Gehäuses angeordnet und ist gegenüber dem Gehäuse abgedichtet. Dies kann dadurch geschehen, das zusätzliche Dichtungselemente zwischen Gehäuse und Fenster angeordnet sind. Es kann aber auch durch Dichtungselemente geschehen, die zwischen Blende und Gehäuse angeordnet sind. Das Fenster überdeckt dabei die gesamte Öffnung und verschließt diese somit.

Diese Vorrichtung wird vorzugsweise für die Verwendung an Fahrzeugen vorgeschlagen, insbesondere an militärischen Fahrzeugen. Das Fahrzeug weißt dazu ein Chassis auf, mindestens einen Aufbau, ein Fahrwerk und ein Antriebsaggregat. Weiterhin weist das Fahrzeug einen Bildschirm zur Bildwiedergabe für die aufgenommenen Bildsignale der Kamera auf.

In dem Fahrzeug ist dann mindestens eine Vorrichtung wie vorgenannt vorgesehen, wobei die Vorrichtung derart angeordnet ist, dass die Kamera einen Umgebungsbereich des Fahrzeugs einsehen kann. Das bedeutet, dass sie Kamera in ihrem Gehäuse und vor dem Fenster so platziert wird, dass die Kamera durch das Fenster zumindest einen Teil der Umgebung um das Fahrzeug herum wahrnehmen kann.

Mittels der vorgenannten Ausführungsformen der Erfindung ist es möglich, durch die Geometrie und die Anordnung des Spaltes sowie durch Verwendung mehrerer Spalte einen gleichmäßigen Flüssigkeitsfilm und/oder ein gleichmäßiges Gaspolster auf der Seite des Fensters zu erzeugen, welcher dem Außenbereich zugewandt ist. Dadurch ist eine gleichmäßige Freihaltung des Fensters möglich.

Für die Funktion in einem Fahrzeug wird vorgeschlagen, bei Regen kontinuierlich Gas einzuspeisen, um das Fenster tropfenfrei zu halten. Bei auftretender Verschmutzung kann dann Flüssigkeit zugeschaltet werden, um diese vom Fenster zu entfernen.

Weitere Merkmale ergeben sich aus den Figuren. Es zeigen:
Figur 1: Eine Frontansicht der erfindungsgemäßen Blende
Figur 2: einen Schnitt durch die erfindungsgemäße Vorrichtung
Figur 3: eine Rückansicht einer erfindungsgemäßen Blende.

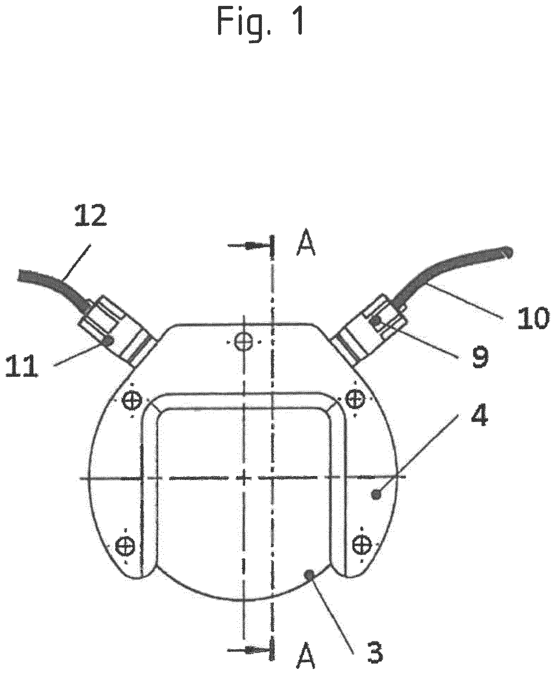

Figur 1 zeigt eine Frontansicht einer erfindungsgemäßen Blende 4 zur Reinigung von Sichtsystemen. Die Blende 4 beinhaltet ein Fenster 3, welches von der Blende 4 zumindest teilweise eingefasst werden kann. Die Blende 4 besitzt weiterhin einen Gasanschluss 9, an welchem eine Gasleitung 10 angeschlossen werden kann und einen Flüssigkeitsanschluss 1, an welchem eine Flüssigkeitsleitung 12 angeschlossen werden kann.

Figur 1 zeigt eine erfindungsgemäße Blende 4 in Frontansicht. Das bedeutet, dass im montierten Zustand der gezeigte Bereich an einem entsprechenden Träger montiert wird. Dazu zeigt die Figur 1 die erfindungsgemäße Blende 4 aus Sicht des Außenbereichs vor der Blende 4.

Die Blende 4 weist Befestigungsmöglichkeiten auf, hier als Bohrungen dargestellt, um die Blende 4 an einen geeigneten Träger zu befestigen. Ein geeigneter Träger kann beispielsweise ein Gehäuse sein oder auch ein Teil eines Fahrzeugs.

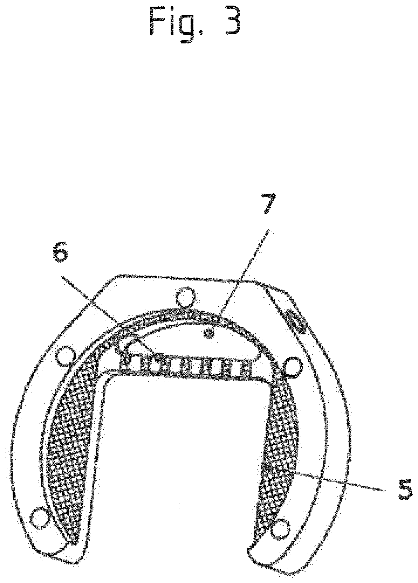

Die Blende 4 überdeckt teilweise das Fenster 3 im eingefassten Zustand, da die Blende 4 Auflageflächen beinhaltet, auf welche das Fenster 3 bei Einfassung aufgelegt wird. Die entsprechenden, dazu erforderlichen Auflageflächen bei Einfassung des Fensters 3 können in Figur 3 erkannt werden.

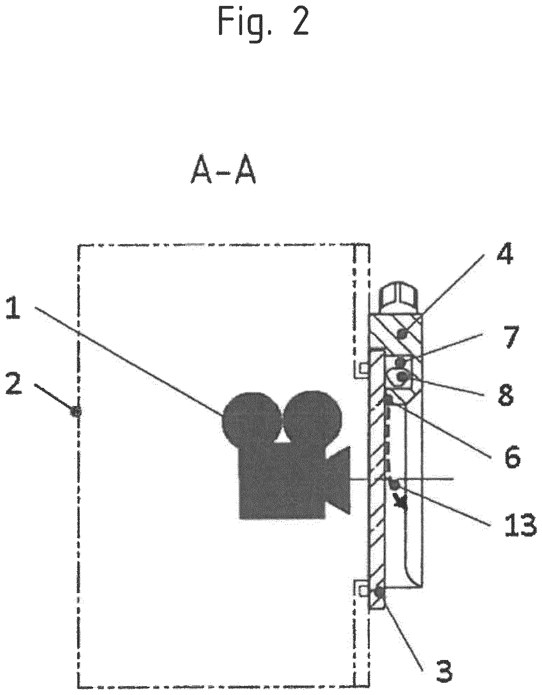

Figur 2 zeigt eine erfindungsgemäße Vorrichtung für die Reinigung von Sichtsystemen mit einer Kamera 1 und einem Gehäuse 2, in dem die Kamera 1 eingebracht ist. Das erfindungsgemäße Gehäuse 2 kann hierzu aus einem dedizierten Gehäuse bestehen, also aus einem extra dafür angefertigten Gehäuse 2, beispielsweise aus Metall oder Kunststoff. Das Gehäuse 2 kann aber auch bereits vorhandener, umbauter Raum sein, in welchen die Vorrichtung eingebracht wird. So kann ein Innenraum eines Fahrzeugs ebenfalls als Gehäuse 2 gelten.

Das Gehäuse 2 weist erfindungsgemäß eine Öffnung auf. Die Kamera 1 wird vor der Öffnung angeordnet, so dass die Kamera 1 Bildsignale durch die Öffnung aufnehmen kann. Sie ist also zur Öffnung gerichtet.

Vor der erfindungsgemäßen Öffnung im Gehäuse 2 wird nun eine erfindungsgemäße Blende 4 angeordnet. Das Fenster 3 ist an der Öffnung des Gehäuses 2 so angeordnet, dass das Fenster 3 die gesamte Öffnung überdeckt. Das in der Blende 4 eingefasste Fenster 3 wird an dem Gehäuse 2 so angeordnet, dass es gegenüber diesem abgedichtet ist.

Im Falle von Verdreckungen durch Flüssigkeiten oder Feststoffen am Fenster 3 kann nun über die Blende 4 Flüssigkeit zugefügt werden. Die Flüssigkeit wird dann über eine am Flüssigkeitsanschluss 1 angeschlossene Flüssigkeitsleitung 12 der Blende 4 zugeführt. Die Flüssigkeit gelangt über mindestens eine Bohrung 8 in einen Hohlraum 7. Dieser Hohlraum wird gebildet durch die Blende 4 sowie das darin eingefasste Fenster 3. Weiterhin führt mindestens ein Spalt 6 vom Hohlraum 7 zum Außenbereich der Blende 4. Dadurch kann die Flüssigkeit aus dem Hohlraum 7 zum Fenster 3 gelangen und dieses säubern.

Um die Flüssigkeit, die durch den Flüssigkeitseinfluss auf das Fenster 3 gelangt rückstandsfrei zu entfernen sowie auch andere Flüssigkeiten wie beispielsweise Regen, ist über eine Gasleitung 10 an einem Gasanschluss 9 eine Gaszufuhr zur Blende 4 möglich. Das Gas gelangt ebenfalls über eine Bohrung 8 in den von Blende 4 und Fenster 3 gebildeten Hohlraum 7. Die Zuführung von Flüssigkeit und/oder Gas in den Hohlraum 7 kann über die gleiche Bohrung 8 geschehen oder über getrennte Bohrungen 8.

Das durch die Spalte 6 austretende Gas streicht entsprechend dem eingezeichneten Gasstrom 13 über das Fenster 3 hinweg und entfernt somit die Flüssigkeit an dem Fenster 3.

Durch diese Anordnung ist zu einem eine kompakte Bauweise möglich, da Gas- bzw. Flüssigkeitszufuhr außerhalb des Sichtbereichs liegen. Zum anderen ist eine kontinuierliche Freihaltung von Verunreinigungen auf dem Fenster 3 möglich.

Figur 3 zeigt die Rückansicht einer erfindungsgemäßen Blende 4, wobei hier nun Auflageflächen für das einzulegende Fenster 3 gezeigt werden. In diesem Falle wird die Dichtung 5 ebenfalls über die Auflageflächen realisiert, um die Scheibe des Fensters 3 gegenüber der Blende 4 abzudichten. Ebenfalls hier zu erkennen ist der Hohlraum 7, welcher zunächst bei nicht eingebrachtem Fenster 3 als Ausnehmung dargestellt ist. Diese Ausnehmung wird seitlich und auf der dieser Ansicht gegenüberliegenden Seite von der Blende begrenzt.

Es wird nun erfindungsgemäß ein Fenster 3 in die Blende 4 eingelegt. Das Fenster 3 wird auf den mit der Dichtung 5 versehenen Auflageflächen aufgelegt und somit von der Blende 4 durch ihren Rand eingefasst. Durch das Einlegen des Fensters 3 wird auch der Hohlraum 7 weiter eingegrenzt, sodass der Hohlraum 7 nun von Fenster 3 und Blende 4 begrenzt ist.

Die vorliegende Erfindung ist nicht auf die vorgenannten Merkmale beschränkt. Vielmehr sind weitere Ausführungsformen denkbar. So kann die Blende jede beliebige Form annehmen und anwendungsbezogen auf die zu verwendende Fensterscheibe angepasst sein. Weiterhin sind Beleuchtungen und/oder Farbfilter für Sichtverbesserungen denkbar. Zuletzt ist es ebenfalls denkbar, die Gas- und/oder Flüssigkeitsführung so zu gestalten, dass sie seitlich auf das Fenster einwirken. Dazu sind die Spalte dann seitlich des Fensters anzuordnen.

### BEZUGSZEICHENLISTE

- 1: Kamera
- 2: Gehäuse
- 3: Fenster
- 4: Blende
- 5: Dichtung
- 6: Spalt
- 7: Hohlraum
- 8: Bohrung
- 9: Gasanschluss
- 10: Gasleitung
- 11: Flüssigkeitsanschluss
- 12: Flüssigkeitsleitung
- 13: Gasstrom

## Patentansprüche

1. Blende (4) zur Reinigung von Sichtsystemen,
mit Auflageflächen,
mit einem Fenster (3), welches in die Auflageflächen einlegbar ist und somit von der Blende (4) zumindest teilweise eingefasst werden kann, wobei die Auflageflächen so gestaltet sind, dass der größte Teil des Fensters frei bleibt, um eine freie Sicht vom Sichtsystem zur Außenseite des Fensters zu gewährleisten,
wobei der Außenbereich des Fensters der Seite des Fensters entspricht, welche den Auflageflächen zugewandt ist,
mit einem Gasanschluss (9) an welchem eine Gasleitung (10) angeschlossen werden kann
und einem Flüssigkeitsanschluss (11), an welchem eine Flüssigkeitsleitung (12) angeschlossen werden kann,
**dadurch gekennzeichnet,**
**dass** die Blende (4) bei eingefasstem Fenster (3) mindestens einen Hohlraum (7) bildet, welcher durch die Blende (4) und das Fenster (3) begrenzt wird, dass dieser Hohlraum (7) durch mindestens eine Bohrung (8) mit dem Gasanschluss (9) und dem Flüssigkeitsanschluss (11) verbunden ist,
**dass** mindestens ein Spalt (6) den Hohlraum (7) mit dem Außenbereich verbindet und dass eine Seite des Spaltes (6) direkt bei eingefasstem Fenster (3) von einer Fläche des Fensters (3) gebildet wird.

2. Blende (4) nach Anspruch 1, **dadurch gekennzeichnet, dass** mehrere Spalten (6) den Hohlraum (7) mit dem Außenbereich verbinden.

3. Blende (4) nach einem der Ansprüche 1 oder 2, **dadurch gekennzeichnet, dass** mindestens eine Dichtung (5) das Fenster (3) gegenüber der Blende (4) abdichtet.

4. Blende (4) nach Anspruch 3, **dadurch gekennzeichnet, dass** die Dichtung (5) als Dichtfläche ausgeführt ist.

5. Blende (4) nach einem der Ansprüche 1 bis 4, **dadurch gekennzeichnet, dass** die Blende zwei Bohrungen (8) beinhaltet, nämlich eine Bohrung (8) zur Verbindung von Hohlraum (7) und Gasanschluss (9) und eine Bohrung (8) zur Verbindung von Hohlraum (7) und Flüssigkeitsanschluss (11).

6. Blende (4) nach einem der Ansprüche 1 bis 5, **dadurch gekennzeichnet, dass** die Blende mehrere Hohlräume (7) beinhaltet, wobei mindestens ein Hohlraum (7) durch mindestens einen Spalt (6) mit dem Außenbereich verbunden ist und wobei dieser Hohlraum (7) durch eine Bohrung (8) mit dem Gasanschluss (9) verbunden ist, während mindestens ein weiterer Hohlraum (7) durch mindestens einen weiteren Spalt (6) mit dem Außenbereich verbunden ist und wobei dieser weitere Hohlraum (7) durch eine weitere Bohrung (8) mit dem Flüssigkeitsanschluss (11) verbunden ist.

7. Blende (4) nach einem der Ansprüche 1 bis 6, **dadurch gekennzeichnet, dass** die Blende Befestigungsmöglichkeiten beinhaltet, um die Blende (4) an einem Träger zu befestigen.

8. Blende (4) nach einem der Ansprüche 1 bis 7, **dadurch gekennzeichnet, dass** der Spalt (6) sich zum Außenbereich hin verengt.

9. Blende (4) nach einem der Ansprüche 1 bis 8, **dadurch gekennzeichnet, dass** der Spalt (6) zum Fenster (3) geneigt verläuft.

10. Vorrichtung für die Reinigung von Sichtsystemen,
mit einer Kamera (1) und einem Gehäuse (2), wobei das Gehäuse (2) eine Öffnung aufweist und die Kamera (1) vor der Öffnung angeordnet ist, so dass die Kamera (1) Bildsignale durch die Öffnung (3) aufnehmen kann,
**dadurch gekennzeichnet,**
**dass** die Vorrichtung eine Blende (4) nach einem der Ansprüche 1 bis 9 beinhaltet, wobei das Fenster (3) an der Öffnung des Gehäuses (2) angeordnet ist und gegenüber dem Gehäuse (2) abgedichtet ist,
so dass das Fenster (3) die gesamte Öffnung überdeckt.

11. Vorrichtung nach Anspruch 10, **dadurch gekennzeichnet, dass** als Gas der Gasleitung (10) Luft verwendet wird.

12. Vorrichtung nach Anspruch 10 oder 11, **dadurch gekennzeichnet, dass** als Flüssigkeit der Flüssigkeitsleitung (12) Wasser verwendet wird.

13. Vorrichtung nach einem der Ansprüche 10 bis 12, **dadurch gekennzeichnet, dass** die Gasleitung (10) und/oder die Flüssigkeitsleitung (12) unter Druck stehen.

14. Fahrzeug mit einem Chassis, mindestens einem Aufbau, einem Fahrwerk sowie einem Antriebsaggregat,
mit einem Bildschirm zur Bildwiedergabe,
**dadurch gekennzeichnet,**
**dass** das Fahrzeug mindestens eine Vorrichtung nach einem der Ansprüche 10 bis 13 beinhaltet,
wobei die Vorrichtung derart angeordnet ist, dass die Kamera (1) einen Umgebungsbereich des Fahrzeugs einsehen kann
und die Kamera (1) mit dem Bildschirm verbunden ist, um die Bildsignale auf den Bildschirm zu übertragen.

## Claims

1. Aperture (4) for cleaning vision systems,
having support faces,
having a window (3), which may be placed into the support faces and can thus be at least partially surrounded by the aperture (4), wherein the support faces are designed such that the majority of the window remains free to ensure free vision from the vision system to the outside of the window,
wherein the exterior of the window corresponds to that side of the window that faces the support faces,
having a gas connector (9) to which a gas line (10) can be connected
and a liquid connector (11) to which a liquid line (12) can be connected,
**characterized**
**in that**, when the window (3) is surrounded, the aperture (4) forms at least one cavity (7) delimited by the aperture (4) and the window (3),
**in that** this cavity (7) is connected to the gas connector (9) and the liquid connector (11) by at least one hole (8),
**in that** at least one gap (6) connects the cavity (7) to the exterior and
**in that**, when the window (3) is surrounded, one side of the gap (6) is formed directly by a face of the window (3) .

2. Aperture (4) according to Claim 1, **characterized in that** a plurality of gaps (6) connect the cavity (7) to the exterior.

3. Aperture (4) according to either of Claims 1 and 2, **characterized in that** at least one seal (5) seals the window (3) with respect to the aperture (4).

4. Aperture (4) according to Claim 3, **characterized in that** the seal (5) is embodied in the form of a sealing surface.

5. Aperture according to one of Claims 1 to 4, **characterized in that** the aperture includes two holes (8), to be precise one hole (8) for connecting the cavity (7) and the gas connector (9) and one hole (8) for connecting the cavity (7) and the liquid connector (11).

6. Aperture (4) according to one of Claims 1 to 5, **characterized in that** the aperture includes a plurality of cavities (7), wherein at least one cavity (7) is connected to the exterior by at least one gap (6) and wherein said cavity (7) is connected to the gas connector (9) by a hole (8), while at least one further cavity (7) is connected to the exterior by at least one further gap (6) and wherein said further cavity (7) is connected to the liquid connector (11) by a further hole (8).

7. Aperture (4) according to one of Claims 1 to 6, **characterized in that** the aperture includes attachment features for attaching the aperture (4) to a carrier.

8. Aperture (4) according to one of Claims 1 to 7, **characterized in that** the gap (6) tapers in the direction of the exterior.

9. Aperture (4) according to one of Claims 1 to 8, **characterized in that** the gap (6) extends in an inclined manner in the direction of the window (3).

10. Apparatus for cleaning vision systems,
having a camera (1) and a housing (2), wherein the housing (2) has an opening and the camera (1) is arranged in front of the opening so that the camera (1) can record image signals through the opening (3),
**characterized**
**in that** the apparatus includes an aperture (4) according to one of Claims 1 to 9,
wherein the window (3) is arranged at the opening of the housing (2) and is sealed with respect to the housing (2),
and the window (3) therefore covers the entire opening.

11. Apparatus according to Claim 10, **characterized in that** the gas in the gas line (10) that is used is air.

12. Apparatus according to Claim 10 or 11, **characterized in that** the liquid in the liquid line (12) that is used is water.

13. Apparatus according to one of Claims 10 to 12, **characterized in that** the gas line (10) and/or the liquid line (12) are pressurized.

14. Vehicle having a chassis, at least one body, a running gear and a drive unit,
having a screen for reproducing images,
**characterized**
**in that** the vehicle includes at least one apparatus according to one of Claims 10 to 13,
wherein the apparatus is arranged such that the camera (1) can see into a surrounding region of the vehicle and the camera (1) is connected to the screen so as to transmit the image signals to the screen.

## Revendications

1. Obturateur (4) de nettoyage de systèmes de vision,
comprenant des surfaces d'appui,
comprenant une fenêtre (3) qui peut être insérée dans les surfaces d'appui et peut donc être entourée au moins partiellement par l'obturateur (4), les surfaces d'appui étant configurées de telle sorte que la majeure partie de la fenêtre reste dégagée pour assurer une vue dégagée du système de vision sur l'extérieur de la fenêtre,
la zone extérieure de la fenêtre correspondant au côté de la fenêtre qui est tourné vers les surfaces d'appui,
comprenant un branchement de gaz (9) auquel une conduite de gaz (10) peut être branchée, et
un branchement de liquide (11) auquel une conduite de liquide (12) peut être branchée,
**caractérisé**
**en ce que** l'obturateur (4), lorsque la fenêtre (3) est entourée, forme au moins une cavité (7) qui est délimitée par l'obturateur (4) et la fenêtre (3),
**en ce que** cette cavité (7) est reliée par au moins un perçage (8) au branchement de gaz (9) et au branchement de liquide (11),
**en ce qu'**au moins un interstice (6) relie la cavité (7) à la zone extérieure, et
**en ce qu'**un côté de l'interstice (6) est formé directement par une surface de la fenêtre (3) lorsque la fenêtre (3) est entourée.

2. Obturateur (4) selon la revendication 1, **caractérisé en ce que** plusieurs interstices (6) relient la cavité (7) à la zone extérieure.

3. Obturateur (4) selon l'une quelconque des revendications 1 ou 2, **caractérisé en ce qu'**au moins un joint d'étanchéité (5) rend la fenêtre (3) étanche par rapport à l'obturateur (4).

4. Obturateur (4) selon la revendication 3, **caractérisé en ce que** le joint d'étanchéité (5) est réalisé sous la forme d'une surface d'étanchéité.

5. Obturateur (4) selon l'une quelconque des revendications 1 à 4, **caractérisé en ce que** l'obturateur comporte deux perçages (8), à savoir un perçage (8) pour relier la cavité (7) et le branchement de gaz (9) et un perçage (8) pour relier la cavité (7) et le branchement de liquide (11).

6. Obturateur (4) selon l'une quelconque des revendications 1 à 5, **caractérisé en ce que** l'obturateur comporte plusieurs cavités (7), au moins une cavité (7) étant reliée par au moins un interstice (6) à la zone extérieure, et cette cavité (7) étant reliée au branchement de gaz (9) par un perçage (8), alors qu'au moins une autre cavité (7) est reliée à la zone extérieure par au moins un autre interstice (6), et ladite autre cavité (7) étant reliée au branchement de liquide (11) par un autre perçage (8).

7. Obturateur (4) selon l'une quelconque des revendications 1 à 6, **caractérisé en ce que** l'obturateur comporte des options de fixation pour fixer l'obturateur (4) à un support.

8. Obturateur (4) selon l'une quelconque des revendications 1 à 7, **caractérisé en ce que** l'interstice (6) se rétrécit en direction de la zone extérieure.

9. Obturateur (4) selon l'une quelconque des revendications 1 à 8, **caractérisé en ce que** l'interstice (6) s'étend de manière inclinée en direction de la fenêtre (3).

10. Dispositif de nettoyage de systèmes de vision,
comprenant une caméra (1) et un boîtier (2), le boîtier (2) présentant une ouverture, et la caméra (1) étant disposée devant l'ouverture de sorte que la caméra (1) peut enregistrer des signaux d'image à travers l'ouverture (3),
**caractérisé en ce que** le dispositif comporte un obturateur (4) selon l'une quelconque des revendications 1 à 9, la fenêtre (3) étant disposée au niveau de l'ouverture du boîtier (2) et étant rendue étanche par rapport au boîtier (2) de sorte que la fenêtre (3) couvre l'ensemble de l'ouverture.

11. Dispositif selon la revendication 10, **caractérisé en ce que** de l'air est utilisé comme gaz de la conduite de gaz (10).

12. Dispositif selon la revendication 10 ou 11, **caractérisé en ce que** de l'eau est utilisée comme liquide de la conduite de liquide (12).

13. Dispositif selon l'une quelconque des revendications 10 à 12, **caractérisé en ce que** la conduite de gaz (10) et/ou la conduite de liquide (12) sont mises sous pression.

14. Véhicule comprenant un châssis, au moins une carrosserie, un train de roulement ainsi qu'un groupe moteur,
comprenant un écran pour l'affichage d'images,
**caractérisé en ce que** le véhicule comporte au moins un dispositif selon l'une quelconque des revendications 10 à 13,
le dispositif étant disposé de telle sorte que la caméra (1) a vue sur une zone environnante du véhicule et la caméra (1) est reliée à l'écran pour transmettre les signaux d'image à l'écran.
